# EUROPEAN PATENT APPLICATION

(11) **EP 3 050 992 A1**
(43) Date of publication of application: **03.08.2016**
(21) Application number: 13894277.6
(22) Date of filing: 03.12.2013
(51) Int. Cl.: C22C 38/38, B21B 37/74

(54) **PRODUCTION PROCESS FOR NON-QUENCHED AND TEMPERED STEEL**

(30) Priority: 26.09.2013 CN 201310443693
(71) Applicant: Peking University Founder Group Co., Ltd, Beijing 100871 (CN); Suzhou Suxin Special Steel Co., Ltd., Suzhou, Jiangsu 215151 (CN); Jiangsu Suzhou Steel Group Co., Ltd., Suzhou, Jiangsu 215151 (CN)
(72) Inventor: ZHEN, Yu, Suzhou Jiangsu 215151 (CN); XU, Yifeng, Suzhou Jiangsu 215151 (CN); LI, Haoqing, Suzhou Jiangsu 215151 (CN); SONG, Qunsheng, Suzhou Jiangsu 215151 (CN)
(74) Representative: Dantz, Jan Henning
(86) International application number: PCT/CN2013/088378
(87) International publication number: WO 2015/043058

(57) **Abstract**

A process for producing a non quenched and tempered steel. The process comprises a cooling step at least after a finish rolling step. In said cooling step, an intense cooling and a moderate cooling are carried out alternately to allow the steel to undergo at least two stages of water cooling, so that the core temperature and the surface temperature of the steel become the same within a specified time, and thus ensures the uniformity of the mechanical properties of the steel and improves the production efficiency.

## Description

### Technical Field

The present invention relates to a process for producing non quenched and tempered steel, and belongs to the technical field of ferrous metallurgy.

### Background

Currently, bars for machine cutting in China generally use ordinary steels, such as 45, 40Cr and 42CrMo steels. These bars need quenching and tempering heat treatment when used as raw materials for machine cutting. Quenching and tempering processes are high in cost. Since quenching and tempering processes increase energy consumption, pollute the environment, and bring some waste product loss, they do not meet the energy-saving and environmental protection requirements at present. Therefore, non quenched and tempered steels that do not require quenching and tempering processes and can be directly used for cutting will gradually replace ordinary steels and become a trend in the future. Non quenched and tempered steels means mechanical structural steels that can achieve performance requirements without quenching and tempering treatment. Using such steels to manufacture parts can omit quenching and tempering heat treatment process, and has advantages such as saving energy and materials, simple technology, etc., and can decrease environmental pollution and prevent oxidation, decarbonization, deformation and cracking.

The domestic traditional process for producing non quenched and tempered steels for cutting includes: electric furnace smelting - refining - mold casting - controlled rolling and controlled cooling. The difficulty of such process in production is the control of macrostructure of casting blanks. At present, the domestic and oversea manufacturers generally achieve the control of macrostructure of casting blanks by improving chemical composition of non quenched and tempered steels. However, as shown by studies, it is difficult to make non quenched and tempered steels achieve performance requirements only by component design.

Therefore, the Shougang Corporation has proposed a novel process for producing non quenched and tempered steels, which process comprises: converter smelting, slag cutoff tapping, deoxidation alloying in ladle, LF ladle refining, feeding S line, full protection casting by ladle bottom blowing argon, slab temperature control, controlled cooling and rolling, etc. In the rolling step, the heating temperature is 1100-1180°C, initial rolling temperature is 1020-1100°C, finishing rolling temperature is 850-920°C, the relative deformation is 15-35%. After rolling, the temperature is decreased to 600°C and then slowly cooled to room temperature. The non quenched and tempered steels produced by above process are difficult to ensure the core temperature and the surface temperature of the steels to become the same by slow cooling within a short time, and tend to cause the surface and core of the steels have large differences in strength and toughness, and seriously nonuniform mechanical properties within a short time. When the above process is used to produce large-sized non quenched and tempered steels (e.g. ϕ70 to ϕ145 mm bars), the phenomenon of nonuniform mechanical properties of the surface and the core of the bars is even more obvious.

### Summary of the Invention

The technical problem to be solved by the present invention is to overcome the defects that the surface mechanical properties and core mechanical properties of the steels produced by existing processes for producing non quenched and tempered steels are nonuniform. Therefore, the present invention provides a process for producing non quenched and tempered steels to ensure the uniformity of the surface mechanical properties and core mechanical properties of final products.

For this purpose, the present invention provides a process for producing non quenched and tempered steel, comprising a cooling step at least carried out after a finishing step; in said cooling step, an intense cooling and a moderate cooling are carried out alternately to allow the steel to undergo at least two stages of water cooling, so that the core temperature and the surface temperature of the steel become the same within a specified time.

According to the process for producing non quenched and tempered steel of present invention, in said cooling step, the steel is subjected to three stages of water cooling, wherein the first stage of water cooling uses intense cooling, the second stage of water cooling uses moderate cooling, and the third stage of water cooling uses intense cooling.

According to the process for producing non quenched and tempered steel of present invention, in said cooling step, the cooling intensity is controlled by controlling the opening degree of valve(s) of a water cooling unit.

According to the process for producing non quenched and tempered steel of present invention, in said cooling step, the temperature of the steel decreases 100°C-400°C in 4-7 seconds after water cooling, and the temperature of the steel further decreases 50°C-200°C after temperature reversion.

According to the process for producing non quenched and tempered steel of present invention, in said cooling step, the first stage valve opening degree is controlled to be 30%-40%, the second stage valve opening degree is controlled to be 20%, and the third stage valve opening degree is controlled to be 30%-40%, to ensure the surface temperature of the steel to decrease 100-400°C in 4-7 seconds.

According to the process for producing non quenched and tempered steel of present invention, in said cooling step, the steel is subjected to temperature-dropping cooling by means of spray cooling after temperature reversion.

According to the process for producing non quenched and tempered steel of present invention, after said temperature-dropping cooling, the steel is separately disposed on a cold bed and subjected to air cooling for 10-12 minutes.

According to the process for producing non quenched and tempered steel of present invention, after said air cooling, the steel is stacked and subjected to shield cooling.

The process for producing non quenched and tempered steel according to present invention further comprises a finish rolling step before the cooling step, in said finish rolling step, the temperature of the steel is controlled at ≤950°C at the entry into the finish rolling step; the steel is subjected to low temperature rolling when the steel temperature is 780°C-900°C.

The process for producing non quenched and tempered steel according to present invention further comprises a smelting step before the finish rolling step, the smelting step comprises electric furnace smelting step, ladle furnace smelting step and refining step carried out sequentially.

According to the process for producing non quenched and tempered steel of present invention, a molten iron smelting is utilized in the electric furnace smelting , wherein the final phosphorus content is ≤0.015%, the final carbon content is 0.03% to 0.10%, and the final temperature is 1620-1700°C.

According to the process for producing non quenched and tempered steel of present invention, in the ladle furnace smelting step and/or the refining step silicon carbide, ferrosilicon powder are used to deoxidize.

According to the process for producing non quenched and tempered steel of present invention, the ladle furnace smelting step comprises making white slag, and holding the white slag for 20 minutes or more.

According to the process for producing non quenched and tempered steel of present invention, in the refining step, the refining time is 45 minutes or more, and the hydrogen content is controlled at 1.5 ppm or less.

The process for producing non quenched and tempered steel of present invention further comprises a continuous casting step after the refining step, in said continuous casting step, a overheat is controlled at 20-35°C, a pulling speed is controlled at 0.5m/min-0.6m/min.

The process for producing non quenched and tempered steel of present invention further comprises a heating step after the continuous casting step, in said heating step, the steel billet is placed in a heating furnace to be heated, wherein the preheating stage temperature is controlled at 850 ± 30°C, the heating stage temperature is controlled at 1100±30°C, the soaking stage temperature is controlled at 1130±30°C, and the total time of the soaking stage is not less than 2 hours.

In a preferred embodiment, the present invention provides a process for producing a non quenched and tempered steel, the process comprises following steps, successively:
(1) an electric furnace smelting step: providing iron raw materials having desired steel composition, a molten iron smelting is utilized in the electric furnace smelting , wherein final phosphorus content is ≤0.015%, final carbon content is 0.03% to 0.10%, and final temperature is 1620°C-1700°C;
(2) a ladle furnace smelting step: wherein deoxidation is carried out using silicon carbide and/or ferrosilicon powder, white slag is made by adding lime, the white slag is held for 20 minutes or more;
(3) a refining step: wherein deaeration is carried out, the refining time is controlled at 45 minutes or more, and the hydrogen content is controlled at 1.5 ppm or less;
(4) a continuous casting step: the steel melt obtained in the refining step is subjected to continuous casting, the overheat of the steel melt is controlled at 20-35°C, the pulling speed is controlled at 0.5m/min-0.6m/min;
(5) a heating step: the steel billet produced in the continuous casting step is placed in a furnace to be heated, wherein the preheating stage temperature is controlled at 850±30°C, the heating stage temperature is controlled at 1100±30°C, the soaking stage temperature is controlled at 1130±30°C, the total time of the soaking stage is not less than 2 hours;
(6) a finish rolling step: wherein the temperature of the steel is controlled at ≤950°C at the entry into the finish rolling step; the steel is subjected to low temperature rolling when the steel temperature is 780-900°C; and
(7) a cooling step: wherein intense cooling and moderate cooling are carried out alternately to allow the steel to undergo at least two stages of water cooling, so that the core temperature and the surface temperature become the same during the cooling.

The process for producing non quenched and tempered steel according to present invention has following advantages:
1. The process for the production of non quenched and tempered steel according to present invention alters the cooling mode before finish rolling in previous production of non quenched and tempered steel; the process at least has a cooling step after the finish rolling step; in contrast to the cooling mode in the prior art which employs the cooling mode of single water cooling or consistent air cooling, the present process utilizes alternate intense cooling and moderate cooling. The intense cooling can ensure the surface temperature of the steel to decrease rapidly; and the moderate cooling allows the core temperature of the steel to dissipate gradually to the surface; a further intense cooling is carried out to allow rapid heat dissipation. The intense cooling and the moderate cooling can be carried out alternately several times according to practical requirement. A water cooling mode combining intense cooling and moderate cooling allows the core temperature and the surface temperature of the steel to become the same within a short time, and thus ensures the uniformity of the mechanical properties of the steel and improves the production efficiency.
2. According to the process for producing non quenched and tempered steel of present invention, in said cooling step, the steel is subjected to three stages of water cooling, wherein the first stage of water cooling uses intense cooling, the second stage of water cooling uses moderate cooling, and the third stage of water cooling uses intense cooling. Upon the completion of the finish rolling, the steel has a relatively high temperature. An intense cooling is utilized in the first stage of water cooling so that the surface temperature of the steel decreases rapidly. Due to the heat transfer effect, after the surface temperature decreases, the heat of the core gradually transfers to the surface. In order to make the heat of the core transfers to the surface as much as possible, a moderate cooling is utilized in the second stage of water cooling. After the moderate cooling, heat transfer allows the surface temperature to increase, and then the surface is cooled rapidly again by intense cooling mode so that the surface heat is removed quickly. At this time, the heat transfer allows the surface temperature and the core temperature become the same, thus ensuring the uniformity of mechanical properties.
3. According to the process for producing non quenched and tempered steel of present invention, in said cooling step, the cooling is controlled by controlling the opening degree of valves of a water cooling unit, in particular, the first stage valve opening degree is controlled to be 30%-40%, the second stage valve opening degree is controlled to be 20%, and the third stage valve opening degree is controlled to be 30%-40% to ensure the surface temperature of the steel to decrease 100°C-400°C in 4-7 seconds. The flow rate of water can be controlled by controlling the opening degree of valve, such that the intensity of water cooling can be controlled. This control manner is very simple. After the valve opens a certain length, the steel is introduced into water to perform water treatment. During the water treatment, the surface of the steel is cooled in all directions to ensure the uniformity of surface cooling.
4. According to the process for producing non quenched and tempered steel of present invention, in said cooling step, the steel is subjected to temperature-dropping cooling by means of spray cooling after temperature reversion. Spray cooling is an advantageous supplement of water cooling. By spray cooling, the heat of the core further spreads to the surface, which further ensures the core temperature and the surface temperature become the same.
5. According to the process for producing non quenched and tempered steel of present invention, after said temperature-dropping cooling, the steel is separately disposed on a cold bed and subjected to air cooling for 10-12 minutes. After spray cooling, the steel is separately disposed on a cold bed to perform air cooling. A spray cooling can be additionally provided to further dissipate surface heat.
6. According to the process for producing non quenched and tempered steel of present invention, after said air cooling, the steel is stacked to perform shield cooling. Shield cooling is a manner of slow cooling. In order to avoid the above cooling procedure too rapid and impairing the structure and property of the steel, the steel is stacked and subjected to shield cooling. After the cooling scheme including water cooling, spray cooling and air cooling, the surface temperature and the core temperature of the steel has essentially become the same. At this time, shield cooling is used to slow down the cooling speed, thereby improving the structure and property of the steel.
7. According to the process for producing non quenched and tempered steel of present invention, in said ladle furnace smelting step, white slag is made and held for 20 minutes or more. The white slag holding time is controlled strictly to make the effect of deoxidation, desulfurization and inclusion removal of the white slag more obvious, thereby improving the purity of steel.
8. According to the process for producing non quenched and tempered steel of present invention, in the refining step, the refining time is not less than 45 minutes, and the hydrogen content is controlled at 1.5 ppm or less. The refining process effectively controls the hydrogen content and can better solve the risk of subsequent hydrogen induced cracking of steel; there is an adequate time to make a more uniform composition; and the process provides an adequate time for inclusions to float upward, thereby effectively solving the problem of controlling the inclusions, such that the finished product will be purer.
9. According to the process for producing non quenched and tempered steel of present invention, in the continuous casting step, the overheat is strictly controlled at 20-35°C; the pulling speed is controlled at 0.5m/min - 0.6m/min. In the continuous casting, a low overheat and a low pulling speed ensure the quality of casting blanks.

The keypoint of present invention is to make the performance of the surface and core of steels substantially consistent by controlling the rolling and by controlling the cooling step after the rolling, thereby improving the quality of steels. Specific cooling control includes:
(1) After finish rolling, the steel is subjected to at least two stages of water cooling by alternating intense cooling and moderate cooling, such that the core temperature and the surface temperature of the steel become the same within a certain time. In particular, after finish rolling, said steel is subjected to three stages of water cooling, wherein the first stage of water cooling uses intense cooling, the second stage of water cooling uses moderate cooling, and the third stage of water cooling uses intense cooling. In the specific water cooling, the intensity of cooling is controlled by controlling the opening degree of valve(s) of the water cooling unit. In present invention, the intense cooling generally means a cooling at a cooling rate of ≥7°C/s; whereas the moderate cooling means a cooling at a cooling rate of 2-4°C/s.
(2) After water cooling, the steel is annealed and then subjected to temperature-dropping cooling by means of spray cooling after temperature reversion.
(3) After said temperature-dropping cooling, the steel is separately disposed on a cold bed and subjected to air cooling for 10-12 minutes.
(4) After said air cooling, the steel is stacked and subjected to shield cooling.

After finish rolling, the steel is subjected to cooling control through above manner (especially water cooling), which alters the cooling mode before finish rolling in previous production of non quenched and tempered steel; the process at least has a cooling step after the finish rolling step; in contrast to the cooling mode in the prior art which employs the cooling mode of single water cooling or consistent air cooling, the present process utilizes alternate intense cooling and moderate cooling. The intense cooling can ensure the surface temperature of the steel to decrease rapidly; and the moderate cooling allows the core temperature of the steel to dissipate gradually to the surface; a further intense cooling is carried out to allow rapid heat dissipation. The intense cooling and the moderate cooling can be carried out alternately several times according to practical requirement. A water cooling mode combining intense cooling and moderate cooling allows the core temperature and the surface temperature of the steel to become the same within a short time, and thus ensures the uniformity of the mechanical properties of the steel and improves the production efficiency. On such a basis, by a combination control of subsequent spray cooling, air cooling and shield cooling allows the core temperature to continuously dissipate to the surface and the surface temperature to be taken away constantly; moreover, the combination of said cooling manners results in an appropriate cooling speed. Use of shield cooling after air cooling allows the cooling speed not so fast in the case that the surface temperature and the core temperature of steel are consistent, thus improving overall mechanical properties.

### Description of the drawings

In order to make present invention to be clearly understood more easily, the present invention will be further described in detail according to the embodiments with reference to the drawings, wherein:
Figure 1 is a metallograph at a magnification of 500X of a non quenched and tempered steel produced by the manufacturing process of present invention for replacing common quenched and tempered 45 steel;
Figure 2 is an image showing the grain size of a non quenched and tempered steel produced by the manufacturing process of present invention for replacing common quenched and tempered 45 steel;
Figure 3 is an image showing inclusions of a non quenched and tempered steel produced by the manufacturing process of present invention for replacing common quenched and tempered 45 steel;
Figure 4 is a metallograph at a magnification of 500X of a non quenched and tempered steel produced by the manufacturing process of present invention for replacing quenched and tempered 42CrMo steel;
Figure 5 is an image showing the grain size of a non quenched and tempered steel produced by the manufacturing process of present invention for replacing quenched and tempered 42CrMo steel;
Figure 6 is an image showing inclusions of a non quenched and tempered steel produced by the manufacturing process of present invention for replacing quenched and tempered 42CrMo steel.

### Detailed Description

The following description will explain the controlled rolling, controlled cooling, smelting and continuous casting steps of present invention in detail, with respect to the production processes of several non quenched and tempered steels.

### Example 1

This example provides a process for producing a non quenched and tempered steel which is in place of common quenched and tempered 45 steel and directly for cutting application. The process comprises a finish rolling step and a cooling step after the finish rolling; wherein, in the finish rolling step, the temperature of rods at the entry into the finish rolling step was controlled at ≤950°C; the rods were subjected to low temperature rolling when the rods temperature is 780°C-900°C. After the rolling, the steel was subjected to three stages of water cooling by means of a specialized controllable water cooling unit, wherein the first stage of water cooling employed intense cooling, the second stage of water cooling employed moderate cooling, and the third stage of water cooling employed intense cooling.

Here, it should be noted that there are many ways to control water cooling intensity. In this example, the water flow was controlled by controlling the opening degree of the valve(s) of water cooling unit so as to control water cooling strength. Specifically, the first stage valve opening degree was controlled to be 30%-40%, the second stage valve opening degree was controlled to be 20%, and the third stage valve opening degree was controlled to be 30%-40% to ensure the surface temperature of the rods to decrease 100°C-400°C in 5 seconds. After the temperature of the rods was reversed, the rods were subjected to spray cooling to decrease the rods temperature by 50-200°C, such that the heat quickly dissipates, then the rods were separately disposed on a cold bed and subjected to air cooling for 10 minutes, finally the rods were removed from the cold bed and stacked to undergo shield cooling.

In the process of this example for producing a non quenched and tempered steel which is in place of common quenched and tempered 45 steel and directly for cutting application, the rods were subjected to three stages of water cooling, wherein the first stage of water cooling employed intense cooling, the second stage of water cooling employed moderate cooling, and the third stage of water cooling employed intense cooling. Upon the completion of finish rolling, the rods had a relatively high temperature. The rods were subjected to the first stage of water cooling using intense cooling so that the surface temperature of the steel decreased rapidly. After the surface temperature decreased, the heat of the core gradually transferred to the surface, due to the heat transfer effect. In order to make the heat of the core transfer to the surface as much as possible, the second stage of water cooling employed moderate cooling so that more time was left for heat transfer of the core during cooling. After the moderate cooling, the heat transfer allowed the surface temperature increasing, and then the surface was cooled rapidly again by intense cooling manner so that the heat of the surface was removed quickly. At this time, the heat transfer allowed the surface temperature and the core temperature become the same, thus ensuring the uniformity of mechanical properties.

### Example 2

This example provides a process for producing a non quenched and tempered steel which is in place of common quenched and tempered 45 steel and directly for cutting application; the process is a further improvement over Example 1. As compared with Example 1, this process further comprises a smelting step before the finish rolling step, the smelting step comprising electric furnace smelting step, ladle furnace smelting and refining step carried out sequentially.

In the electric furnace smelting step, molten iron smelting was employed, the phosphorus content before steel tapping was strictly controlled at ≤0.015%, the final carbon content was 0.03% to 0.10%, and the final temperature was 1620°C-1700°C. The electric furnace smelting can better control deslagging operation than traditional converter smelting.

In the ladle furnace (LF) smelting step, deoxidization was performed using silicon carbide, ferrosilicon powder; lime was added to make white slag; the white slag was held for 20 minutes or more so that the inclusions can be thoroughly removed by the white slag.

In the refining furnace (VD) smelting step, degassing treatment was carried out to ensure that hydrogen content was controlled at 1.5 ppm or less, and the refining time was not less than 45 minutes.

Advantages of using LF furnace + VD furnace refining: as compared with traditional process using LF furnace refining only, this refining process effectively controls hydrogen content, and can better solve the risk of subsequent hydrogen induced cracking of bars; an adequate time allows to obtain a more uniform composition; and an adequate time is provided for inclusions to float upward, thus effectively solving the problem of inclusion control.

### Example 3

This example provides a process for producing a non quenched and tempered steel which is in place of common quenched and tempered 45 steel and directly for cutting application; the process is a further improvement over Example 1 and Example 2. In this example, the continuous casting step and heating step were improved. The continuous casting step and the heating step were arranged after the refining step, and before the rolling step and the water cooling step.

In the continuous casting step, molten iron in a tundish was introduced into a crystallizer by a submerged nozzle, thus the problem that air tends to be brought in when using traditional nozzles is avoided. Furthermore, argon gas was blow to the joint site of the submerged nozzle and the tundish, thus preventing air from entering into the tundish. The overheat was strictly controlled at 20-35°C, and the pulling speed was controlled at 0.5m/min-0.6m/min. In the continuous casting, low overheat and low casting speed ensured the quality of casting blank. When cutting after continuous casting, the temperature at cut place was controlled at ≤820°C. After cutting, the surface of the casting blank needed to be manually checked to ensure no obvious defects. A macrostructure sample of the casting blank was taken to ensure that the casting blank had no cracks or shrinkage. The central looseness was not more than level three; this requirement was to ensure the quality of the surface and macrostructure of the rods that are subsequently rolled. After passing inspection, the casting blank was sent to a heating furnace to be heated, wherein the preheating stage temperature was 850±30°C, the heating stage temperature was 1100±30°C, the soaking stage temperature was 1130±30°C, and the total time of the soaking stage was not less than 2 hours.

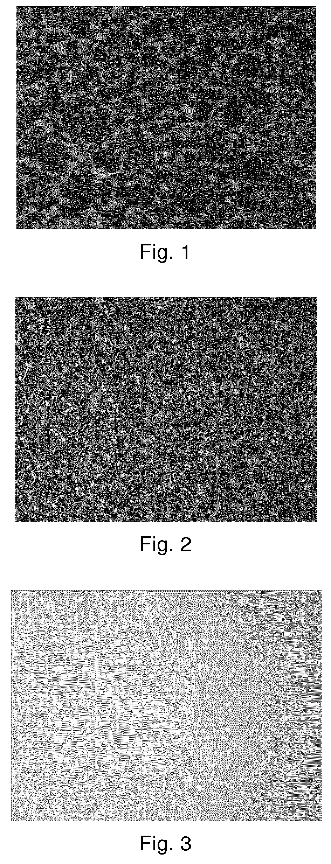

The process in this example produced a non quenched and tempered steel which is in place of common quenched and tempered 45 steel and directly for cutting application, its metallographic structures at a magnification of 500X comprise ferrite and pearlite (as shown in Fig. 1), and have actual grain size (100X) rated to level 10 to 11 according to GB/T6394 (as shown in Fig. 2); the grains are fine and uniform; and the rate difference from the core to the edge is not greater than 1.5. The mechanical properties of the surface and the core of steel are uniform. The strength and the toughness from the core to the edge change very little, thus effectively avoiding the defects that the mechanical properties of general materials cannot satisfy application demands after subjecting to large surface processing. The hardness difference from the core to the edge is less than 30 HB, thus effectively avoiding the disadvantageous effect of large hardness changes on cutting tools and processing. Moreover, the content of inclusions is low, and the purity of the steel is high (as shown in Fig.3).

### Example 4

This example provides a process for producing a non quenched and tempered steel which is in place of quenched and tempered 42CrMo steel and directly for cutting application. The process comprises a finish rolling step and a cooling step after the finish rolling; wherein, in the finish rolling step, the temperature of rods at the entry into the finish rolling step was controlled at ≤900°C; the rods were subjected to low temperature rolling when the rods temperature is 800°C-900°C. After the rolling, the steel was subjected to three stages of water cooling by means of a specialized controllable water cooling unit, wherein the first stage of water cooling employed intense cooling, the second stage of water cooling employed moderate cooling, and the third stage of water cooling employed intense cooling.

Here, it should be noted that there are many ways to control water cooling intensity. In this example, the water flow was controlled by controlling the opening degree of the valve(s) of water cooling unit so as to control water cooling strength. Specifically, the first stage valve opening degree was controlled to be 30%-40%, the second stage valve opening degree was controlled to be 30%, and the third stage valve opening degree was controlled to be 30%-40% to ensure the surface temperature of the rods to decrease 150°C-400°C in 5 seconds. After the temperature of the rods was reversed, the rods were subjected to spray cooling to decrease the rods temperature by 80-200°C, such that the heat quickly dissipates, then the rods were separately disposed on a cold bed and subjected to air cooling for 10 minutes, finally the rods were removed from the cold bed and stacked to undergo shield cooling.

In the process of this example for producing a non quenched and tempered steel which is in place of quenched and tempered 42CrMo steel and directly for cutting application, the rods were subjected to three stages of water cooling, wherein the first stage of water cooling employed intense cooling, the second stage of water cooling employed moderate cooling, and the third stage of water cooling employed intense cooling. Upon the completion of finish rolling, the rods had a relatively high temperature. The rods were subjected to the first stage of water cooling using intense cooling so that the surface temperature of the steel decreased rapidly. After the surface temperature decreased, the heat of the core gradually transferred to the surface, due to the heat transfer effect. In order to make the heat of the core transfer to the surface as much as possible, the second stage of water cooling employed moderate cooling so that more time was left for heat transfer of the core during cooling. After the moderate cooling, the heat transfer allowed the surface temperature increasing, and then the surface was cooled rapidly again by intense cooling manner so that the heat of the surface was removed quickly. At this time, the heat transfer allowed the surface temperature and the core temperature become the same, thus ensuring the uniformity of mechanical properties.

### Example 5

This example provides a process for producing a non quenched and tempered steel which is in place of quenched and tempered 42CrMo steel and directly for cutting application; the process is a further improvement over Example 1. As compared with Example 1, this process further comprises a smelting step before the finish rolling step, the smelting step comprising electric furnace smelting step, ladle furnace smelting and refining step carried out sequentially.

In the electric furnace smelting step, molten iron smelting was employed, the phosphorus content before steel tapping was strictly controlled at ≤0.015%, the final carbon content was 0.03% to 0.10%, and the final temperature was 1670°C-1700°C. The electric furnace smelting can better control deslagging operation than traditional converter smelting.

In the ladle furnace (LF) smelting step, deoxidization was performed using silicon carbide, ferrosilicon powder; lime was added to make white slag; the white slag was held for 20 minutes or more so that the inclusions can be thoroughly removed by the white slag.

In the refining furnace (VD) smelting step, degassing treatment was carried out to ensure that hydrogen content was controlled at 1.5 ppm or less, and the refining time was not less than 45 minutes.

Advantages of using LF furnace + VD furnace refining: as compared with traditional process using LF furnace refining only, this refining process effectively controls hydrogen content, and can better solve the risk of subsequent hydrogen induced cracking of bars; an adequate time allows to obtain a more uniform composition; and an adequate time is provided for inclusions to float upward, thus effectively solving the problem of inclusion control.

### Example 6

This example provides a process for producing a non quenched and tempered steel which is in place of quenched and tempered 42CrMo steel and directly for cutting application; the process is a further improvement over Example 1 and Example 2. In this example, the continuous casting step and heating step were improved. The continuous casting step and the heating step were arranged after the refining step, and before the rolling step and the water cooling step.

In the continuous casting step, molten iron in a tundish was introduced into a crystallizer by a submerged nozzle, thus the problem that air tends to be brought in when using traditional nozzles is avoided. Furthermore, argon gas was blow to the joint site of the submerged nozzle and the tundish, thus preventing air from entering into the tundish. The overheat was strictly controlled at 23-35°C, and the pulling speed was controlled at 0.5m/min-0.6m/min. In the continuous casting, low overheat and low casting speed ensured the quality of casting blank. When cutting after continuous casting, the temperature at cut place was controlled at ≤820°C. After cutting, the surface of the casting blank needed to be manually checked to ensure no obvious defects. A macrostructure sample of the casting blank was taken to ensure that the casting blank had no cracks or shrinkage. The central looseness was not more than level three; this requirement was to ensure the quality of the surface and macrostructure of the rods that are subsequently rolled. After passing inspection, the casting blank was sent to a heating furnace to be heated, wherein the preheating stage temperature was 850±30°C, the heating stage temperature was 1100±30°C, the soaking stage temperature was 1130±30°C, and the total time of the soaking stage was not less than 2 hours.

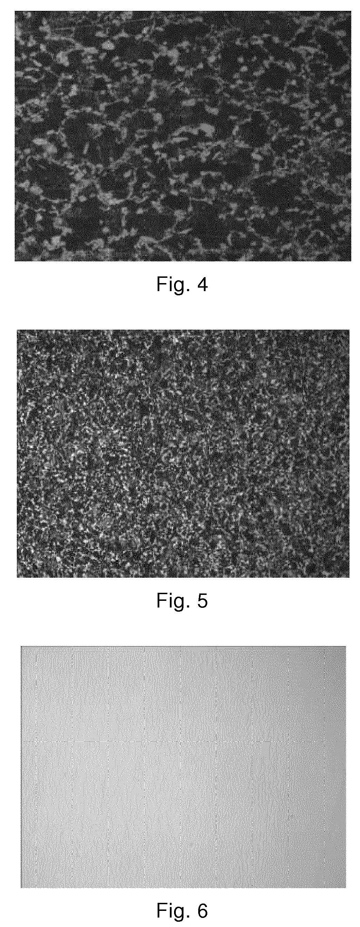

The process in this example produced a non quenched and tempered steel which is in place of quenched and tempered 42CrMo steel and directly for cutting application, its metallographic structures at a magnification of 500X comprise ferrite and pearlite (as shown in Fig. 3), and have actual grain size (100X) rated to level 10 according to GB/T6394 (as shown in Fig. 4); the grains are fine and uniform; and the rate difference from the core to the edge is not greater than 1.5. The mechanical properties of the surface and the core of steel are uniform. The strength and the toughness from the core to the edge change very little, thus effectively avoiding the defects that the mechanical properties of general materials cannot satisfy application demands after subjecting to large surface processing. The hardness difference from the core to the edge is less than 30 HB, thus effectively avoiding the disadvantageous effect of large hardness changes on cutting tools and processing. Moreover, the content of inclusions is low, and the purity of the steel is high (as shown in Fig.6).

### Example 7

This example provides a general process for producing non quenched and tempered steels, the process begins from smelting step. The smelting step comprising electric furnace smelting step, ladle furnace smelting and refining step carried out sequentially. In the electric furnace smelting step, molten iron smelting was employed, the phosphorus content before steel tapping was strictly controlled at ≤0.015%, the final carbon content was 0.03% to 0.10%, and the final temperature was 1620°C-1700°C. The electric furnace smelting can better control deslagging operation than traditional converter smelting. In the ladle furnace (LF) smelting step, deoxidization was performed using silicon carbide, ferrosilicon powder; lime was added to make white slag; the white slag was held for 20 minutes or more so that the inclusions can be thoroughly removed by the white slag. In the refining furnace (VD) smelting step, degassing treatment was carried out to ensure that hydrogen content was controlled at 1.5 ppm or less, and the refining time was not less than 45 minutes.

Advantages of using LF furnace + VD furnace refining: as compared with traditional process using LF furnace refining only, this refining process effectively controls hydrogen content, and can better solve the risk of subsequent hydrogen induced cracking of bars; an adequate time allows to obtain a more uniform composition; and an adequate time is provided for inclusions to float upward, thus effectively solving the problem of inclusion control.

The refining step was followed by a continuous casting step. In the continuous casting step, molten iron in a tundish was introduced into a crystallizer by a submerged nozzle, thus the problem that air tends to be brought in when using traditional nozzles is avoided. Furthermore, argon gas was blow to the joint site of the submerged nozzle and the tundish, thus preventing air from entering into the tundish. The overheat was strictly controlled at 20-35°C, and the pulling speed was controlled at 0.5m/min-0.6m/min. In the continuous casting, low overheat and low casting speed ensured the quality of casting blank. When cutting after continuous casting, the temperature at cut place was controlled at ≤820°C. After cutting, the surface of the casting blank needed to be manually checked to ensure no obvious defects. A macrostructure sample of the casting blank was taken to ensure that the casting blank had no cracks or shrinkage. The central looseness was not more than level three; this requirement was to ensure the quality of the surface and macrostructure of the rods that are subsequently rolled. After passing inspection, the casting blank was sent to a heating furnace to be heated, wherein the preheating stage temperature was 850±30°C, the heating stage temperature was 1100±30°C, the soaking stage temperature was 1130±30°C, and the total time of the soaking stage was not less than 2 hours.

The heating step was followed by a finish rolling step and a cooling step. In the finish rolling step, the temperature of rods at the entry into the finish rolling step was controlled at ≤950°C; the rods were subjected to low temperature rolling when the rods temperature is 780°C-900°C. After the rolling, the steel was subjected to three stages of water cooling by means of a specialized controllable water cooling unit, wherein the first stage of water cooling employed intense cooling, the second stage of water cooling employed moderate cooling, and the third stage of water cooling employed intense cooling.

In this example, the water flow was controlled by controlling the opening degree of the valve(s) of water cooling unit so as to control water cooling strength. Specifically, the first stage valve opening degree was controlled to be 30%-40%, the second stage valve opening degree was controlled to be 20%, and the third stage valve opening degree was controlled to be 30%-40% to ensure the surface temperature of the rods to decrease 100°C-400°C in 5 seconds. After the temperature of the rods was reversed, the rods were subjected to spray cooling to decrease the rods temperature by 50-200°C, such that the heat quickly dissipates, then the rods were separately disposed on a cold bed and subjected to air cooling for 10 minutes, finally the rods were removed from the cold bed and stacked to undergo shield cooling.

In the production process of this example, the rods were subjected to three stages of water cooling, wherein the first stage of water cooling employed intense cooling, the second stage of water cooling employed moderate cooling, and the third stage of water cooling employed intense cooling. Upon the completion of finish rolling, the rods had a relatively high temperature. The rods were subjected to the first stage of water cooling using intense cooling so that the surface temperature of the steel decreased rapidly. After the surface temperature decreased, the heat of the core gradually transferred to the surface, due to the heat transfer effect. In order to make the heat of the core transfer to the surface as much as possible, the second stage of water cooling employed moderate cooling so that more time was left for heat transfer of the core during cooling. After the moderate cooling, the heat transfer allowed the surface temperature increasing, and then the surface was cooled rapidly again by intense cooling manner so that the heat of the surface was removed quickly. At this time, the heat transfer allowed the surface temperature and the core temperature become the same, thus ensuring the uniformity of mechanical properties.

Obviously, the above examples are merely exemplary examples for clear description, but not a limitation to the embodiments. Those skilled in the art can make a change or modification in other forms on the basis of above descriptions. It is unnecessary and impossible to list all the embodiments. Obvious changes or modifications derived therefrom are still within the protection scope of the present invention.

## Claims

1. A process for producing non quenched and tempered steel, comprising a cooling step at least carried out after a finishing step, **characterized in that**: in said cooling step, an intense cooling and a moderate cooling are carried out alternately to allow the steel to undergo at least two stages of water cooling, so that the core temperature and the surface temperature of the steel become the same within a specified time.

2. The process for producing non quenched and tempered steel according to claim 1, **characterized in that**: in said cooling step, the steel is subjected to three stages of water cooling, wherein the first stage of water cooling uses intense cooling, the second stage of water cooling uses moderate cooling, and the third stage of water cooling uses intense cooling.

3. The process for producing non quenched and tempered steel according to claim 1 or 2, **characterized in that**: in said cooling step, the cooling intensity is controlled by controlling the opening degree of valve(s) of a water cooling unit.

4. The process for producing non quenched and tempered steel according to any one of claims 1-3, **characterized in that**: in said cooling step, the temperature of the steel decreases 100°C-400°C in 4-7 seconds after water cooling, and the temperature of the steel further decreases 50°C-200°C after temperature reversion.

5. The process for producing non quenched and tempered steel according to claim 4, **characterized in that**: in said cooling step, the first stage valve opening degree is controlled to be 30%-40%, the second stage valve opening degree is controlled to be 20%, and the third stage valve opening degree is controlled to be 30%-40%, to ensure the surface temperature of the steel to decrease 100-400°C in 4-7 seconds.

6. The process for producing non quenched and tempered steel according to any one of claims 3-5, **characterized in that**: in said cooling step, the steel is subjected to temperature-dropping cooling by means of spray cooling after temperature reversion.

7. The process for producing non quenched and tempered steel according to any one of claims 3-6, **characterized in that**: after said temperature-dropping cooling, the steel is separately disposed on a cold bed and subjected to air cooling for 10-12 minutes.

8. The process for producing non quenched and tempered steel according to claim 7, **characterized in that**: after said air cooling, the steel is stacked and subjected to shield cooling.

9. The process for producing non quenched and tempered steel according to any one of claims 1-8, **characterized in that**: the process further comprises a finish rolling step before the cooling step, in said finish rolling step, the temperature of the steel is controlled at ≤950°C at the entry into the finish rolling step; the steel is subjected to low temperature rolling when the steel temperature is 780°C-900°C.

10. The process for producing non quenched and tempered steel according to any one of claims 6-9, **characterized in that**: the process further comprises a smelting step before the finish rolling step, the smelting step comprises electric furnace smelting step, ladle furnace smelting step and refining step carried out sequentially.

11. The process for producing non quenched and tempered steel according to claim 10, **characterized in that**: a molten iron smelting is utilized in the electric furnace smelting, wherein the final phosphorus content is ≤0.015%, the final carbon content is 0.03% to 0.10%, and the final temperature is 1620-1700°C.

12. The process for producing non quenched and tempered steel according to claim 10 or 11, **characterized in that**: in the ladle furnace smelting step and/or the refining step silicon carbide, ferrosilicon powder are used to deoxidize.

13. The process for producing non quenched and tempered steel according to any one of claims 10-12, **characterized in that**: the ladle furnace smelting step comprises making white slag, and holding the white slag for 20 minutes or more.

14. The process for producing non quenched and tempered steel according to claim 13, **characterized in that**: in the refining step, the refining time is 45 minutes or more, and the hydrogen content is controlled at 1.5 ppm or less.

15. The process for producing non quenched and tempered steel according to claim 14, **characterized in that**: the process further comprises a continuous casting step after the refining step, in said continuous casting step, a overheat is controlled at 20-35°C, a pulling speed is controlled at 0.5m/min- 0.6m/min.

16. The process for producing non quenched and tempered steel according to claim 15, **characterized in that**: the process further comprises a heating step after the continuous casting step, in said heating step, the steel billet is placed in a heating furnace to be heated, wherein the preheating stage temperature is controlled at 850 ± 30°C, the heating stage temperature is controlled at 1100±30°C, the soaking stage temperature is controlled at 1130±30°C, and the total time of the soaking stage is not less than 2 hours.

17. A process for producing a non quenched and tempered steel, the process comprises following steps, successively:
(1) an electric furnace smelting step: providing iron raw materials having desired steel composition, a molten iron smelting is utilized in the electric furnace smelting , wherein final phosphorus content is ≤0.015%, final carbon content is 0.03% to 0.10%, and final temperature is 1620°C-1700°C;
(2) a ladle furnace smelting step: wherein deoxidation is carried out using silicon carbide and/or ferrosilicon powder, white slag is made by adding lime, the white slag is held for 20 minutes or more;
(3) a refining step: wherein deaeration is carried out, the refining time is controlled at 45 minutes or more, and the hydrogen content is controlled at 1.5 ppm or less;
(4) a continuous casting step: the steel melt obtained in the refining step is subjected to continuous casting, the overheat of the steel melt is controlled at 20-35°C, the pulling speed is controlled at 0.5m/min-0.6m/min;
(5) a heating step: the steel billet produced in the continuous casting step is placed in a furnace to be heated, wherein the preheating stage temperature is controlled at 850±30°C, the heating stage temperature is controlled at 1100±30°C, the soaking stage temperature is controlled at 1130±30°C, the total time of the soaking stage is not less than 2 hours;
(6) a finish rolling step: wherein the temperature of the steel is controlled at ≤950°C at the entry into the finish rolling step; the steel is subjected to low temperature rolling when the steel temperature is 780-900°C; and
(7) a cooling step: wherein intense cooling and moderate cooling are carried out alternately to allow the steel to undergo at least two stages of water cooling, so that the core temperature and the surface temperature become the same during the cooling.
